# EUROPEAN PATENT APPLICATION

(11) **EP 2 695 653 A1**
(43) Date of publication of application: **12.02.2014**
(21) Application number: 12768064.3
(22) Date of filing: 09.04.2012
(51) Int. Cl.: B01D 11/04, C22B 3/02

(54) **HEATER AND HEATING METHOD FOR WET EXTRACTION TANK**

(30) Priority: 08.04.2011 CN 201110088419
(71) Applicant: Jiangxi Rare Earth & Rare Metals Tungsten Group Holding Co., Ltd., Nanchang, Jiangxi 330046 (CN)
(72) Inventor: LI, Changqing, Nanchang Jiangxi 330046 (CN); XU, Jun, Nanchang Jiangxi 330046 (CN); ZHANG, Wuguo, Nanchang Jiangxi 330046 (CN); ZHAN, Haibo, Nanchang Jiangxi 330046 (CN)
(74) Representative: Mittler, Enrico
(86) International application number: PCT/CN2012/073660
(87) International publication number: WO 2012/136154

(57) **Abstract**

A heater and a heating method for a wet extraction tank, said heater comprising a heating tube (2) and the heating tube (2) comprising a spiral glass tube; the two ends of the heating tube (2) are provided with an air inlet (3) and an air outlet (4) respectively; the air inlet (3) at one end is connected to a steam supply apparatus via a steam tube (7), and the air outlet (4) at the other end is in communication with an apparatus (10) containing micro-steam or hot water; the steam tube (7) is provided with a pressure regulating valve (5) for adjusting the steam pressure inside the heating tube (2); the glass tube is fixedly connected to the extraction tank (1) by means of a wooden material; the wooden material is fixedly connected to the tank via a stainless steel bolt; the glass tube is fixed to the wooden material by means of wrapping and welding a heat-resistant and acid- and alkali-resistant soft plastic sheeting. The heating method comprises causing the material liquid inside the tank to remain in a constant state of ebullition so that heat is evenly distributed to every level and location thereof, thereby ensuring that heating occurs uniformly throughout the tank.

## Description

### TECHNICAL FIELD

The present invention relates to a heater and a heating method for heating a clarifying chamber of the tank body of wet extraction tank for extracting, separating, and smelting in winter.

### BACKGROUND OF THE INVENTION

In hydrometallurgy, cold winter weather leads to an ambient temperature for the material liquid in extraction tank body is too low, which results in a poor extraction and seriously affects the quality of the separation products. With auxiliary electric heating the material liquid in extraction tank or keeping thermal insulation for extraction hall, there are problems of high cost, poor insulation and insecurity.

### SUMMARY OF THE INVENTION

An object of the present invention is to provide a heater for wet extraction tank, which is with low energy consuming, clean and friendly environment, safe and stable, as well as efficient for heating.

Another object of the present invention is to provide a heating method for wet extraction tank, which is with low energy consuming, clean and friendly environment, safe and stable, as well as efficient for heating.

To this end, according to one aspect of the present invention, there is provided a heater for wet extraction tank, characterized in that, said heater comprises one or more heating tubes, said heating tube includes a spirally coiled glass tube; the two ends of the heating tube are provided with a gas inlet and a gas outlet, the gas inlet at one end is connected to a vapor supplying apparatus via a vapor pipe, and the gas outlet at the other end is in communication with an apparatus containing micro-vapor or hot water; a pressure regulating valve is provided on the vapor pipe for regulating the vapor pressure within the heating tube; the tank body of the extraction tank itself is made of a PVC material; said heating tube is fixed in the tank chamber within the extraction tank; all of said glass tubes are installed within the tank body and fixed to the extraction tank; a gap is provided between said glass tube and the periphery of the tank body; at least one glass tube is in fully contact with the material liquid within the tank body; said glass tube is fixed to said extraction tank via a wooden material which is heat-resistant and difficult to react with the material liquid in the extraction tank; said wooden material is fixedly connected to said tank body via a stainless steel screw; said glass tube is fixed to said wooden material by wrapping a web around said glass tube and said wooden material and welding the web to a closed sleeve, the web is made from a heat-resistant as well as acid- and alkali-resistant soft plastic.

Preferably, the tube wall thickness of the glass tube is of 2.5-3.0 mm.

Preferably, the apparatus containing micro-vapor or hot water is in communication with a heating device, and the hot vapor generated by the heating device is in communication with said vapor supplying apparatus.

Preferably, a plurality of said spiral glass tubes are arranged in parallel.

Preferably, the temperature inside the extraction tank is constant at 35-65°C.

Preferably, the temperature inside the extraction tank is constant at 38-42°C.

Preferably, the temperature inside the extraction tank is constant at 35-40°C.

According to another aspect of the present invention, there is provided a heating method for wet extraction tank, characterized in that a heater comprising a heating tube is used, said heating tube including a spiral glass tube; a gas inlet at one end of the heating tube is connected to a vapor supplying apparatus via a vapor pipe, and a gas outlet at the other end is in communication with an apparatus containing micro-vapor or hot water; a pressure regulating valve is provided on the vapor pipe for regulating the vapor pressure within the heating tube. Before use, a thermometer is used to monitor the temperatures of points at all levels and all corners in order to determine the number of the serpentine glass tubes to be used; the material liquid inside the tank body is caused to roll continuously, such that heat is uniformly brought to the tank at all levels and every points to ensure a uniform and continuous heating of the whole tank body.

The heater for extraction tank according to the present invention uses a serpentine glass tube material which does not react with extraction material liquid and extraction solvent as a heating medium to ensure the stability and safety for use of the appliance, and to ensure that no impurities are brought about by the heating process, thus the quality of the separation products is guaranteed.

The heater for extraction tank according to the present invention uses a vapor passing through a serpentine tube to heat the material liquid and the organic extractant directly at a constant temperature (35-65°C) to ensure that the heating process does not cause damages to the properties of the material liquid and the extractant itself.

For the heater for extraction tank according to the present invention, the size of the serpentine tube is designed reasonably to ensure the best heating effect, that is to heat continuously and uniformly and prevent local temperatures from being too high.

For the heater for extraction tank according to the present invention, it is easy to install the heating device, and it has the advantages of simple operations, low costs of production and running, low energy consumption, constant temperature, clean and pollution-free, long service life and inexpensive.

### BRIEF DESCRIPTION OF THE ACCOMPANYING DRAWING

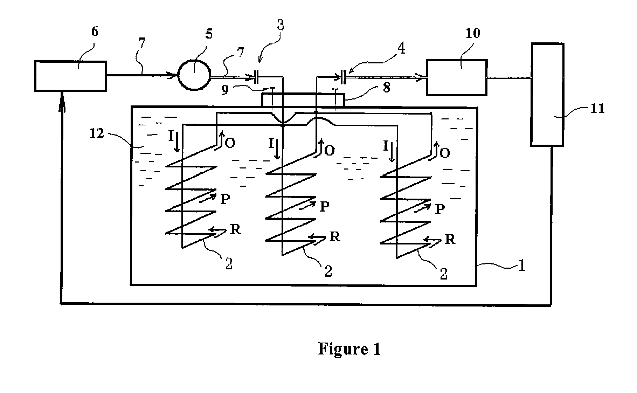

Figure 1 is a schematic representation of the structure of the heater for extraction tank according to the present invention.

### SPECIFIC EMBODIMENTS

As shown in Figure 1, the heater for extraction tank according to the present invention comprises a heating tube 2; said heating tube 2 is a spiral glass tube (or called a spirally coiled glass tube, or serpentine glass tube, or cobra like glass tube), the two ends of the heating tube 2 are provided with a gas inlet 3 and a gas outlet 4, respectively, the gas inlet 3 is connected to a vapor supplying apparatus 6 via a vapor pipe 7, and a pressure regulating valve 5 is provided on the vapor pipe 7 for regulating the pressure of the vapor entering into the heating tube 2; the hot vapor enters into the heating tube 2 from the gas inlet 3 at one end, and later leaves from the gas outlet 4 at the other end as a liquid.

In another embodiment, it is a hot water or micro-vapor that leaves from the gas outlet 4 at the other end, and the hot water or micro-vapor is contained in an apparatus 10 capable of containing hot water or micro-vapor. In another embodiment, the apparatus 10 capable of containing hot water or micro-vapor is in communication with a heating device 11 for recycling.

Inside each of the heating tube 2, the hot vapor enters into the central input section of the spiral glass tube along a direction shown by arrow I, returns to the spiral section of the spiral glass tube along a direction shown by arrow R, advances in the spiral section of the spiral glass tube along a direction shown by arrow P, and finally leaves the spiral section of the spiral glass tube along a direction shown by arrow O.

In one embodiment, only one spiral glass tube is used, while in other embodiments, a plurality of spiral glass tubes can be used in parallel.

For the heater for extraction tank according to the present invention, the tank chamber (clarifying chamber instead of the mixing chamber) installed inside the extraction tank 1 will not be subject to vibration in daily use to ensure its normal use. When being fixed to the extraction tank, a wooden material 8 which is heat-resistant and inert to react with the material liquid 12 in the extraction tank is used as the medium; the wooden material 8 is fixedly connected to the tank body via a stainless steel screw 9; the glass tube 2 is fixed to the wooden material 8 by wrapping the glass tube 2 and the wooden material 8 with a web and welding the web to a closed protecting sleeve, the web is made of a heat-resistant, acid-resistant and alkali-resistant soft plastic material.

For the heater for extraction tank according to the present invention, in case of -5°C in winter, by increasing or decreasing the number thereof installed in the extraction tank, the temperature within the extraction tank can be ensured substantially constant at 35-65°C, particularly around 40°C (such as 38-42°C), and more particularly at 35-40°C, to fully ensure the effectiveness and quality of extraction and thoroughly solve the problem of abnormal extraction in winter due to low temperatures.

There are certain requirements for the shape of the serpentine glass tube that is used, and the glass tubes required for tank bodies with different shapes and sizes are also different, the main points to be considered are: (1) the size should be adapted to the internal structure of the tank body to ensure that the material liquid in the tank body can come into full contact with the heating glass tube as much as possible; (2) the glass tube cannot have any direct contact with the periphery of the tank body itself; (3) the tube wall should be a suitable one, a tube wall that is too thick will negatively affect heat conduction, while a tube wall that is too thin will be fragile so the service life is shorten.

All of the heating glass tubes are installed in the clarifying chamber, not in the mixing chamber, and will not be subject to vibration in daily use so as to ensure its normal use. When fixing to the extraction tank, a wooden material which is heat-resistant and inert to react with the material liquid in the extraction tank should be used as the medium; the wooden material is fixed to the tank body via a stainless steel screw; the glass tube is fixed to the wooden material by wrapping with a heat-resistant as well as acid- and alkali-resistant soft plastic tape and welding the end of tape on the tape itself.

When the vapor passes through the serpentine tube, a vapor pressure regulating valve is used to control the vapor pressure inside the serpentine tube; usually a micro-vapor state for the water outlet of the serpentine tube is a key controlling factor (that is, all the vapor coming out almost becomes hot water). For separation and extraction by tank body, there are not strict requirements for temperature, a temperature above 35 degrees and below 65 degrees can achieve a good extraction, and thus it is unnecessary to install a temperature controller. It can be used safely as long as a thermometer is utilized in the beginning of use to monitor the temperatures of points at all levels, all sides, and all corners for the tank body to determine the number of the serpentine glass tubes to be used.

As vapor heating, the maximum temperature is only around 100 degrees, thus it is ensured that no local temperature is too high; and the material liquid inside the tank body itself is caused to roll continuously, so heat is continuously and uniformly brought to the tank at all levels and everywhere to ensure a uniform and continuous heating of the whole tank body.

The tank itself is made of a PVC material with poor heat conduction and dissipation effects, so additional thermal insulation for the tank is not required. During installation of the serpentine tube, collisions should be avoided, and the fixation to the wooden material should be firm and reliable. Following such operations, there is no abnormal damage in use.

## Claims

1. A heater for wet extraction tank, **characterized in that**,
said heater comprises at least one heating tube, said heating tube includes a spiral glass tube; the two ends of the heating tube are provided with a gas inlet and a gas outlet respectively, the gas inlet at one end is connected to a vapor supplying apparatus via a vapor pipe, and the gas outlet at the other end is in communication with an apparatus containing micro-vapor or hot water;
a pressure regulating valve is provided on the vapor pipe for regulating the vapor pressure within the heating tube;
the tank body of the extraction tank itself is made of a PVC material; said heating tube is fixed in a clarifying chamber (rather than a mixing chamber) within the extraction tank; all of said glass tubes are installed within the tank body and fixed to the extraction tank; a gap is provided between said glass tube and the periphery of the tank body; at least one glass tube is in fully contact with the liquid within the tank body; and
said glass tube is fixed to said extraction tank via a wooden material which is heat-resistant and inert to react with the liquid in the extraction tank; said wooden material is fixed to said tank body via a stainless steel screw; and said glass tube is fixed to said wooden material by wrapping and welding a heat-resistant as well as acid- and alkali-resistant soft plastic web.

2. The heater for wet extraction tank according to claim 1, **characterized in that** the wall thickness of the glass tube is of 2.5-3.0 mm.

3. The heater for wet extraction tank according to claim 1 or 2, **characterized in that** the apparatus containing micro-vapor or hot water is in communication with a heating device, and the hot vapor generated by the heating device is in communication with said vapor supplying apparatus.

4. The heater for wet extraction tank according to claim 1, **characterized in that** a plurality of said spiral glass tubes are used in parallel.

5. The heater for wet extraction tank according to claim 1, **characterized in that** the temperature inside the extraction tank is kept to be constant at 35-65°C.

6. The heater for wet extraction tank according to claim 5, **characterized in that** the temperature inside the extraction tank is kept to be constant at 38-42°C.

7. The heater for wet extraction tank according to claim 5, **characterized in that** the temperature inside the extraction tank is kept to be constant at 35-40°C.

8. A heating method for wet extraction tank, **characterized in that** a heater comprising at least one heating tube is used, said heating tube includes a spiral glass tube; a gas inlet at one end of the heating tube is connected to a vapor supplying apparatus via a vapor pipe, and a gas outlet at the other end of the heating tube is in communication with an apparatus containing micro-vapor or hot water; a pressure regulating valve is provided on the vapor pipe for regulating the vapor pressure within the heating tube;
at the beginning of use of the heater, a thermometer is used to monitor the temperatures of points from point to point in order to determine the number of the spiral glass tubes to be used;
the liquid inside the tank body is caused to roll continuously, such that heat is uniformly brought to the tank at all levels and everywhere to ensure a uniform and continuous heating of the whole tank body.
